# EUROPÄISCHE PATENTSCHRIFT

(11) **EP 1 371 866 B1**
(45) Veröffentlichungstag und Bekanntmachung des Hinweises auf die Patenterteilung: **03.03.2010**
(21) Anmeldenummer: 02013203.1
(22) Anmeldetag: 15.06.2002
(51) Int. Cl.: F16D 13/64, F16D 13/72

(54) **Lamelle für eine Mehrscheibenlamellenkupplung**
Clutch plate for multi-plate friction clutch
Disque d'embrayage pour embrayage multi-disque

(43) Veröffentlichungstag der Anmeldung: 17.12.2003
(73) Patentinhaber: BorgWarner, Inc., Auburn Hills, MI 48326-2872 (US)
(72) Erfinder: Fabricius, Emilio, 68723 Oftersheim (DE); Seeber, Erik, 64283 Darmstadt (DE); Zimprich, Dieter, 69214 Eppelheim (DE); Sigel, Nico, 81675 München (DE)
(74) Vertreter: Patentanwälte Westphal, Mussgnug & Partner

(56) Entgegenhaltungen:
- EP-A- 0 625 647
- EP-A- 0 874 180
- GB-A- 934 002

## Beschreibung

Die Erfindung betrifft eine wenigstens eine Reibfläche aufweisende Lamelle für eine Mehrscheibenlamellenkupplung, insbesondere für eine naßlaufende schaltbare Lamellenkupplung, gemäß dem Oberbegriff des Anspruchs 1.

Mehrscheibenlamellenkupplungen von denen die Erfindung ausgeht sind ganz allgemein in einer Vielzahl von Abwandlungen bekannt. Beispielhaft sei auf die in den Dokumenten DE 28 54 051 A1, US 4,280,609 oder DE 35 32 759 C1 beschriebenen Ausführungsvarianten hingewiesen.

Demnach sind die wesentlichen Bestandteile derartiger Mehrscheibenlamellenkupplungen, auf die nachfolgend Bezug genommen wird, zwei oder mehr sogenannte Lamellen, welche eine im wesentlichen ringförmige Gestalt aufweisen. Umfaßt das Mehrscheibenlamellenkupplung -wie dies bei der überwiegenden Anzahl derartiger Mehrscheibenlamellenkupplungen der Fall isteine Mehrzahl von Lamellen, so ist eine erste Gruppe von Lamellen, die sogenannten Außenlamellen, auf einem mit einer Welle, beispielsweise einer Antriebswelle, gekoppelten Außenlamellenträger und eine zweite Gruppe von Lamellen, die sogenannten Innenlamellen, auf einem mit einer Welle, beispielsweise einer Abtriebswelle, gekoppelten Innenlamellenträger angeordnet. Die Lamellen der beiden Gruppen greifen verzahnungsartig ein Lamellenpaket bildend ineinander, wobei jeweils eine Außenlamelle benachbart zu einer Innenlamelle angeordnet ist. Außenlamellen und Innenlamellen sind in axialer Richtung zueinander verschiebbar und dabei paarweise mit deren aneinander grenzenden Stirnflächen in Reibeingriff, d.h. ein Drehmoment von der Antriebs- auf die Abtriebswelle übertragend, und außer Reibeingriff verbringbar.

Die bekannten Lamellen, von denen die Erfindung ausgeht, sind aus dem Stand der Technik in einer Vielzahl von Abwandlungen bekannt. So sind beispielsweise Lamellen bekannt, welche auf einer oder auf beiden im wesentlichen ringförmigen Stirnflächen eines vorzugsweise metallischen Trägers einen üblicherweise aus einem Faserstoff oder dergleichen gefertigten Reibbelag tragen. Es gibt ferner auch einstückig ausgebildete und aus einem einzigen Material bestehende, insbesondere auch solche, welche aus einem Reibmaterial der vorstehend genannten Art bestehen. Beispielhaft sei wiederum auf die Ausführungen und Zitatstellen in den vorgenannten Druckschriften verwiesen.

In der Regel ist wenigstens eine der beiden miteinander in Reibverbindung verbringbaren Stirnflächen -der sogenannten Reibflächen- benachbarter Lamellen mit einer besonders gestalteten Oberflächenstrukturierung und/oder mit einem Nutmuster oder Nutbild, versehen.

So ist zum Beispiel in der WO 97/32678 eine Oberflächenstrukturierung sogenannter Stahllamellen beschrieben, welche eine Erhöhung des Reibwerts der miteinander in Kontakt stehenden Oberflächen Stahl und Reibbelag benachbarter Lamellen bewirkt.

Demgegenüber weisen beispielsweise die in der Zeichnungsfigur 2 der US 4,280,609 dargestellte Lamelle sowie die in der Figur 4 der DE 28 54 051 A1 dargestellte Lamelle auf deren Reibflächen ein sogenanntes Waffelnutbild auf, bei dem eine Vielzahl parallel verlaufender linearer Nuten von ebensolchen im rechten Winkel hierzu angeordneten gekreuzt werden. Der Grund für eine derartige Nutgebung liegt in einer notwendigen Kühlung der aneinander reibenden Flächen, was durch einen durch diese Nuten geführten Kühlmittelstrom realisiert wird.

Obwohl Lamellen für verschiedenste Drehmomente übertragende Aggregate, wie z.B. Kupplungen, Bremsen oder dergleichen, entwickelt und den entsprechenden unterschiedlichen Belastungen angepaßt wurden, besteht weiterhin das für viele Anwendungsfälle unerwünschte Problem, dass im nicht betätigten Zustand des Aggregats, d.h. wenn kein Drehmoment übertragen werden soll, aus den verschiedensten Ursachen weiterhin ein gewisser Reibkontakt benachbarter Lamellen besteht und somit dennoch ein Drehmoment, das sogenannte Schleppmoment, von der Antriebs- auf die Abtriebswelle oder umgekehrt übertragen wird.

Der Erfindung liegt somit die Aufgabe zugrunde, die bekannten Lamellen wie im Stand der Technik EP 087 4180 und EP 0 625647 für Mehrscheibenlamellenkupplungen derart auszugestalten und weiterzubilden, daß das Schleppmoment reduziert wird.

Diese Aufgabe wird bei einer Lamelle gattungsgemäßer Art durch die Merkmale des kennzeichnenden Teils des Anspruches 1 erfindungsgemäß gelöst.

Vorteilhafte Ausführungen und Weiterbildungen der Erfindung sind in den Unteransprüchen angegeben.

Die Erfindung geht ganz allgemein von einer wenigstens eine Reibfläche aufweisenden Lamelle für ein Mehrscheibenlamellenkupplung zum Übertragen eines Drehmoments -wie z.B. für eine naßlaufende schaltbare Lamellenkupplungaus, welche gemäß dem Stand der Technik wenigstens eine Nuten aufweisende Reibfläche aufweist. Bei wenigstens einer Nut, welche von der inneren Begrenzungskante der Reibfläche bis zu deren äußeren Begrenzungskante verläuft, ist erfindungsgemäß vorgesehen, dass diese wenigstens einen Umlenkpunkt aufweist, an dem sie in einem Winkel abgeknickt ist. An diesem Umlenkpunkt wird das Kühlmittel, wie z.B. Öl, oder dergleichen vorbeigeleitet und erzeugt dort gemäß dem von Bernoulli gefundenen Satz der Druckerhaltung, wonach für eine Stromlinie die Summe aus statischem und dynamischem (sowie geodätischem) Druck konstant ist, eine punktuelle Erhöhung des statischen Drucks. Diese punktuelle Druckerhöhung, führt dazu, dass benachbarte Lamellen auseinandergedrückt und damit im nichtbetätigten Zustand des Übertragungsaggregats (Kupplung) außer Reibeingriff gebracht werden. Die Folge ist letztendlich eine Reduzierung des Schleppmoments.

Modellrechnungen und empirische Versuche haben gezeigt, dass eine besonders starke Reduzierung des Schleppmoments bei einoder zweifach geknickten Nuten eintritt, wenn ein (Knick- oder Umlenk-) Winkel an dem Umlenkpunkt oder an den Umlenkpunkten zwischen 75° und 115° gewählt wird.

Es hat sich fernerhin als besonders vorteilhaft herausgestellt, wenn die in Rede stehenden Nuten wenigstens zwei aufeinanderfolgende Umlenkpunkte aufweisen, an welchen diese Nuten in gegensinnigen Winkeln geknickt sind. Die Nuten einer im wesentlichen ringförmigen Lamelle verlaufen demzufolge S- oder Z-förmig. Einschränkungen hinsichtlich der Nutbreite oder der Nuttiefe bestehen nicht. Die Nutkanäle außerhalb der S- bzw. Z-Form können gleich oder unterschiedlich breit sein, sie können auch radial versetzt sein, wobei als minimaler Versetzungsabstand vorzugsweise etwa eine Nutbreite anzusetzen ist.

Als vorteilhaft hat sich herausgestellt, wenn zwei benachbarte Nuten einen zueinander gegensinnigen Verlauf aufweisen. Fernerhin ist von Vorteil. Wenn wenigstens zwei benachbarte Nuten einen gleichsinnigen Verlauf aufweisen, so dass sich eine paarweise oder gruppenweise spiegelsymmetrische Anordnung von Nuten über der Oberfläche einer beispielsweise ringförmigen Lamelle ergibt. Die Nuten können drehrichtungsorientiert oder (radial-)symmetrisch angeordnet sein.

Bei Lamellen, welche einen Reibbelag aufweisen sind die Nuten der vorgenannten Art vorzugsweise in den Reibbelag eingearbeitet. Hierbei kann die Nuttiefe (und ggf. auch die Nutbreite) auf den jeweiligen Anwendungsfall abgestimmt werden. Die Nuttiefe kann dabei auch die gesamte Reibbelagdicke umfassen. Es ist auch eine Kombination unterschiedlicher Nuttiefen und Nutbreiten möglich. Außerdem können auch andere Nuten vorgesehen werden, welche beispielsweise auf ein bestimmtes Belastungs- oder Schaltverhalten der Kupplung abzielen.

Erfindungsgemäß ist ferner vorgesehen, dass bei Lamellen, welche in der Art einer Scheibe ausgebildet sind und welche auf deren beiden Stirnflächen Reibflächen aufweisen, auf deren beiden Stirnflächen identisch verlaufende Nuten, also ein identisches Nutbild, aufweisen. Dabei können die vorder- und rückseitigen Nutbilder drehrichtungsorientiert, (radial-) symmetrisch oder gegenläufig ausgeführt sein. Auch können die vorderseitige Nutung und die rückseitige Nutung identisch ausgeführt und darüber hinaus gegeneinander um einen Winkel versetzt sein.

Schließlich sieht die Erfindung vor, dass auch ein Teil der Nuten als Sacknuten ausgeführt sein kann.

In einer weiteren Variante der Erfindung ist vorgesehen, dass sich die Nutbreite der in Rede stehenden Nuten über deren Erstreckungslänge ändert.

Diverse Ausführungsbeispiele der Erfindung sind in den Zeichnungen dargestellt und werden im folgenden näher beschrieben. Es zeigen:
- Figur 1 -: verschiedene erfindungsgemäße Nutverläufe auf einer ringförmigen Reiblamelle (Ausschnitt)
a) gleichsinnig verlaufende s-förmige Nuten
b) gegensinnig verlaufende s-förmige Nuten
c) gleichsinnig verlaufende einfach geknickte Nuten
- Figur 2 -: Ausschnitte verschiedener ringförmiger Reiblamellen mit Reibbelägen, welche erfindungsgemäße Nutverläufe aufweisen
a) gegensinnig verlaufende s-förmige Nuten
b) gleichsinnig verlaufende s-förmige Nuten, eng beabstandet, (Krümmungs-)Winkel < 90°
c) gleichsinnig verlaufende s-förmige Nuten, weiter Abstand zwischen den Nuten
d) gleichsinnig verlaufende s-förmige Nuten, eng beabstandet, (Krümmungs-)Winkel > 90°
e) gleichsinnig verlaufende s-förmige Nuten, eng beabstandet, Krümmung radial nach außen versetzt
f) gleichsinnig verlaufende s-förmige Nuten, weiter Abstand benachbarter Nuten, Krümmung radial nach außen versetzt
g) eine Nutung entsprechend der Figur 2b) jedoch mit unterschiedlichen Nutbreiten an Einström- und Abströmseite

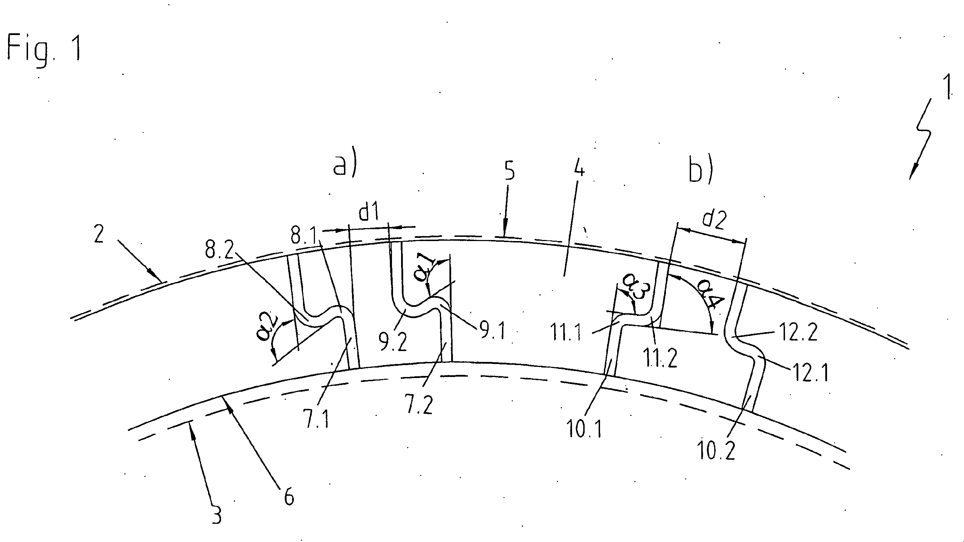

Die Figur 1 zeigt eine Auswahl erfindungsgemäßer Nuten in einer ringförmig ausgebildeten Lamelle 1.

Es sei vorab darauf hingewiesen, dass die eigentliche Reibfläche einer Lamelle nicht zwingend die gesamte Stirnfläche bzw. gar beide Stirnflächen umfassen muß, vielmehr können auch -wie im vorliegenden Fall- ein ringförmiger Ausschnitt oder -wie beispielsweise in der DE 28 54 051 A1-voneinander getrennte Teilbereiche der Stirnflächen als Reibflächen ausgebildet sein. Außerdem kann -wie in der Beschreibungseinleitung bereits angedeutet wurde- als Reibfläche die _{"}nackte" Stirnfläche einer Lamelle oder die mit einem Reibbelag versehene Stirnfläche oder eine Kombination beider Varianten dienen.

Vorliegend ist die ringförmige Lamelle 1 in radialer Richtung durch den in der Figur 1 mit dem Bezugszeichen 2 versehenen Außenumfang und den mit dem Bezugszeichen 3 versehenen Innenumfang begrenzt. Die Reibfläche 4 der Lamelle 1 wird durch den Außenumfang 5, welcher innerhalb des Außenumfangs 2 der ringförmigen Lamelle 1 liegt und den Innenumfang 6, welche innerhalb des Innenumfangs 3 der Lamelle 1 liegt begrenzt. Die eigentliche Reibfläche 4 ist vorliegend also deutlich kleiner, als die Stirnseitenfläche der dargestellten Lamelle 1.

Die Figur 1a) zeigt in benachbarter Anordnung zwei gleichsinnig verlaufende s-förmige Nuten 7.1 und 7.2. Sie erstrecken sich von dem Innenumfang 6 der Reibfläche 4 bis zu deren Außenumfang 5. Im wesentlichen mittig zwischen Innenumfang 6 und Außenumfang 5 befinden sich jeweils zwei erfindungsgemäße Umlenkpunkte 8.1 und 8.2 bzw. 9.1 und 9.2 an denen die Nuten 7.1 bzw. 7.2 ausgehend vom Innenumfang 6 zunächst entgegen dem Uhrzeigersinn und dann im Uhrzeigersinn geknickt verlaufen. Die (Knick-)Winkel sind in der Zeichnungsfigur durch die Symbole α₁ bzw. α₂ gekennzeichnet. Der minimale Abstand benachbarter Nuten 7.1 und 7.2, welcher eine Nutbreite nicht unterschreiten sollte, ist in der Figur durch das Bezugszeichen d₁ kenntlich gemacht.

Die Figur 1b zeigt in benachbarter Anordnung zwei gegensinnig verlaufende s-förmige Nuten 10.1 und 10.2. Sie erstrecken sich wie die Nuten 7.1 und 7.2 gemäß dem vorstehen genannten Ausführungsbeispiel von dem Innenumfang 6 der Reibfläche 4 bis zu deren Außenumfang 5. Außermittig und radial in Richtung des Außenumfangs 5 versetzt befinden sich wiederum jeweils zwei erfindungsgemäße Umlenkpunkte 11.1 und 11.2 bzw. 12.1 und 12.2 an denen die Nuten 10.1 bzw. 10.2 einmal entgegen dem Uhrzeigersinn und einmal im Uhrzeigersinn geknickt verlaufen. Die (Knick-)Winkel sind in der Zeichnungsfigur durch die Symbole α₃ bzw. α₄ gekennzeichnet. Der minimale Abstand der benachbarten Nuten 10.1 und 10.2, welcher wiederum eine Nutbreite nicht unterschreiten sollte, ist in der Figur 1b) mittels des Bezugszeichens d₂ kenntlich gemacht.

Die Figur 1c) zeigt ein drittes Ausführungsbeispiel bei dem benachbart zueinander zwei identisch ausgebildete Nuten 13.1 und 13.2 von dem Innenumfang 6 der Reibfläche 4 bis zu deren Außenumfang 5 verlaufen. Im wesentlichen mittig zwischen Innenumfang 6 und Außenumfang 5 befindet sich jeweils deren einziger Umlenkpunkt 14.1 bzw. 15.1 an denen die Nuten 13.1 bzw. 13.2 ausgehend vom Innenumfang 6 im Uhrzeigersinn geknickt verlaufen. Der (Knick-)Winkel ist in der Zeichnungsfigur durch das Symbol α₅, der Minimalabstand benachbarter Nuten 13.1, 13.2 durch das Symbol d₃ gekennzeichnet.

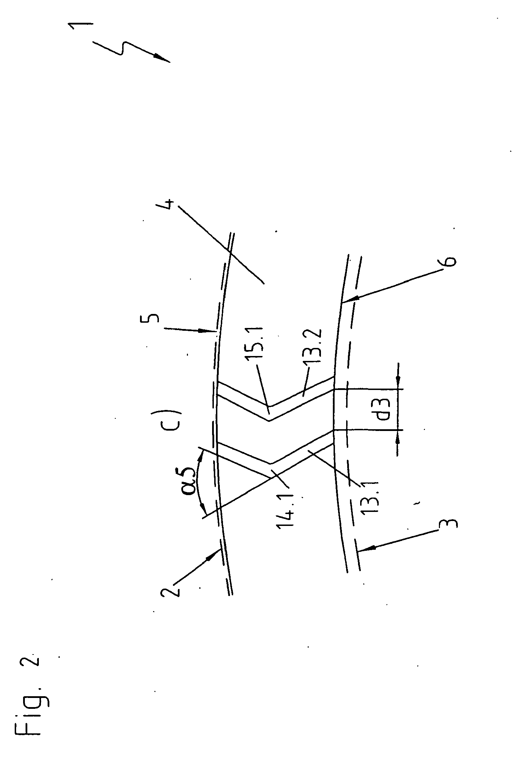

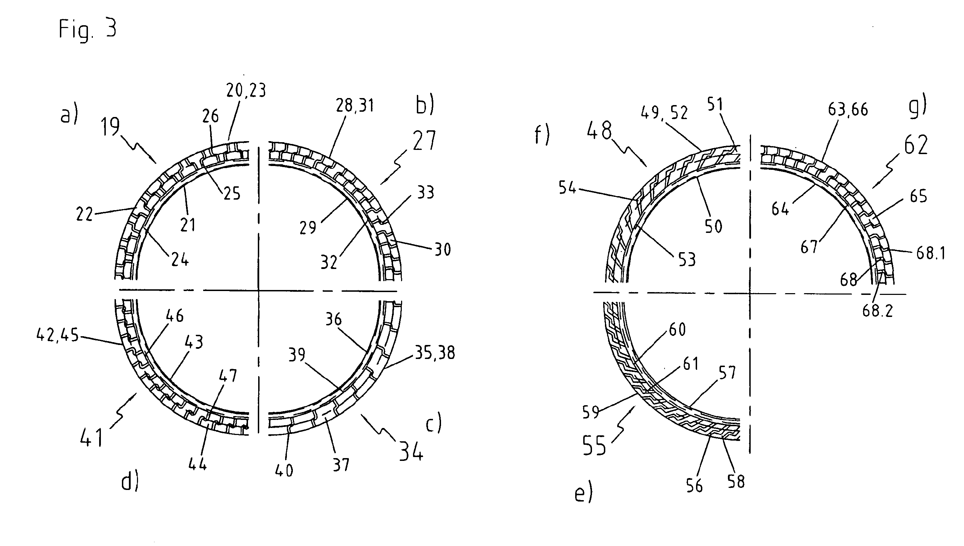

Die Figur 2 zeigt ganz allgemein verschiedene ringförmige Reiblamellen, welche Reibbeläge mit erfindungsgemäßen Nutverläufen aufweisen.

Bei der in der Figur 2a) gezeigten Lamelle 19 ist der Außenumfang durch das Bezugszeichen 20 und der Innenumfang durch das Bezugszeichen 21 gekennzeichnet. Der die Reibfläche 22 bildende Belag der Lamelle 19 wird durch den Außenumfang 23, welcher mit dem Außenumfang 20 der ringförmigen Lamelle 19 zusammenfällt und den Innenumfang 24, welcher innerhalb des Innenumfangs 21 der Lamelle 19 liegt, begrenzt. Die eigentliche Reibfläche 22 ist vorliegend also ebenfalls kleiner, als die durch deren Außenumfang 20 und deren Innenumfang 21 begrenzte Stirnseitenfläche der dargestellten Lamelle 19.

Vorliegend sind erfindungsgemäß um den gesamten Umfang der Lamelle 19 in im wesentlichen gleichem Abstand gegensinnig verlaufende s-förmige Nuten 25 und 26 in den Reibbelag eingearbeitet.

Bei der in der Figur 2b) gezeigten Lamelle 27 sind - entsprechend dem vorangegangen Ausführungsbeispiel- der Außenumfang sowie der Innenumfang mit den Bezugszeichen 28 und 29 versehen. Der die Reibfläche 30 bildende Belag der Lamelle 27 wird wiederum durch den Außenumfang 31, welcher mit dem Außenumfang 28 der ringförmigen Lamelle 27 zusammenfällt und den Innenumfang 32, welcher innerhalb des Innenumfangs 29 der Lamelle 27 liegt, begrenzt.

Im vorliegenden Ausführungsbeispiel sind erfindungsgemäß gleichsinnig verlaufende s-förmige Nuten 33 in den Reibbelag eingearbeitet. Charakteristisch bei dieser Ausführungsvariante ist der vergleichsweise enge Abstand benachbarter Nuten 33 sowie ein Knickwinkel von unter 90° an den jeweiligen Umlenkpunkten.

Bei der in der Figur 2c) gezeigten Lamelle 34 sind - entsprechend den vorangegangen Ausführungsbeispielen- der Außenumfang sowie der Innenumfang mit den Bezugszeichen 35 und 36 versehen. Der die Reibfläche 37 bildende Belag der Lamelle 34 wird durch den Außenumfang 38, welcher mit dem Außenumfang 35 der ringförmigen (Reib-)Lamelle 34 zusammenfällt und den Innenumfang 39, welcher innerhalb des Innenumfangs 36 der Lamelle 34 liegt, begrenzt.

Charakteristika dieser Ausführungsvariante sind die Gleichsinnigkeit des Verlaufs benachbarter Nuten 40, die s-Förmigkeit der Nuten 40, der weite Abstand zwischen benachbarten Nuten 40 sowie die radial mittige Anordnung der Umlenkpunkte der Nuten 40 zwischen Außen- und Innenumfang 38, 39 der Reibfläche 37.

Das Ausführungsbeispiel gemäß der Figur 2d) umfasst entsprechend den vorangegangen drei Ausführungsbeispielen eine im wesentlichen ringförmige Lamelle 41 mit Außenumfang 42 und Innenumfang 43. Die Reibfläche 44 mit Reibbelag ist ebenfalls ringförmig mit einem Außenumfang 45 und einem Innenumfang 46 ausgebildet und erstreckt sich auf der Stirnseite der Lamelle 41 bis zu deren Außenumfang 42 jedoch nicht bis zu deren Innenumfang 43.

Für diese Ausführungsvariante ist charakteristisch, daß die in den die Reibfläche 44 bildenden Reibbelag eingearbeiteten Nuten 47 über dessen gesamten Umfang gleichsinnig in der Form gespiegelter S verlaufen. Der Abstand benachbarter Nuten 47 ist gegenüber der vorangehend beschriebenen Ausführungsvariante gemäß der Teilfigur 2c) gering, jedoch vergleichbar mit der Beabstandung benachbarter Nuten 33 gemäß dem Ausführungsbeispiel gemäß der Teilfigur 2b). Im Unterschied zu der letztgenannten Ausführungsvariante ist jedoch vorliegend der (Krümmungs-)Winkel an den Umlenkpunkten deutlich größer als 90° gewählt.

Auch die Ausführungsform gemäß der Figur 2e) umfasst entsprechend den vorangegangen vier Ausführungsbeispielen eine im wesentlichen ringförmige Lamelle 48 (Außenumfang 49, Innenumfang 50). Die mit einem Reibbelag versehene Reibfläche 51 ist ebenfalls ringförmig die Stirnfläche der Lamelle 48 nur teilweise abdeckend ausgebildet (Außenumfang 52, Innenumfang 53).

Auch dieser Reibbelag weist gleichsinnig verlaufende s-förmige, vergleichsweise eng beabstandete Nuten 54 auf. Vorliegend sind jedoch die Umlenkpunkte im Vergleich zu den vorangegangenen Ausführungsvarianten der Zeichnungsfigur 2 radial nach außen versetzt angeordnet.

Die in der Figur 2f) dargestellte Lamelle 55 (Außenumfang 56 und Innenumfang 57 der Lamelle) weist in deren Reibbelag/fläche 58 (Außenumfang 59 und Innenumfang 60 der Reibfläche 58) eingeformte gleichsinnig verlaufende s-förmige Nuten 61 in der Art der vorstehenden Ausführungsform gemäß der Figur 2e) auf. Hier sind jedoch ein weiterer Abstand benachbarter Nuten 61 sowie noch weiter in radialer Richtung nach außen gerückte Umlenkpunkte gewählt.

Die in der Figur 2g) dargestellte Lamelle 62 mit dem Außenumfang 63 und dem Innenumfang 64 weist in deren Reibbelag/-fläche 65, welche durch den Außenumfang 66 und den Innenumfang 67 begrenzt ist weitgehend identisch mit dem Ausführungsbeispiel gemäß der Figur 2b) ausgeführt.

Im vorliegenden Ausführungsbeispiel sind erfindungsgemäß gleichsinnig verlaufende s-förmige Nuten 68 in den Reibbelag eingearbeitet. Charakteristisch bei dieser Ausführungsvariante ist auch hier der vergleichsweise enge Abstand benachbarter Nuten 68 sowie ein Knickwinkel von unter 90° an den jeweiligen Umlenkpunkten.

Zusätzlich unterscheiden sich die Breiten der Nuten 68 an der Einströmseite 68.2 von den der Nuten 68 an der Abströmseite 68.1.

### Bezugszeichenliste

- 1: Lamelle
- 2: Außenumfang der Lamelle-1
- 3: Innenumfang der Lamelle 1
- 4: Reibfläche der Lamelle 1
- 5: Außenumfang der Reibfläche 4
- 6: Innenumfang der Reibfläche 4

- 7.1: Nut
- 7.2: Nut
- 8.1: Umlenkpunkt
- 8.2: Umlenkpunkt
- 9.1: Umlenkpunkt
- 9.2: Umlenkpunkt

- 10.1: Nut
- 10.2: Nut
- 11.1: Umlenkpunkt
- 11.2: Umlenkpunkt
- 12.1: Umlenkpunkt
- 12.2: Umlenkpunkt

- 13.1: Nut
- 13.2: Nut
- 14.1: Umlenkpunkt
- 15.1: Umlenkpunkt

- 19: Lamelle
- 20: Außenumfang der Lamelle 19
- 21: Innenumfang der Lamelle 19
- 22: Reibfläche der Lamelle 19
- 23: Außenumfang der Reibfläche 22
- 24: Innenumfang der Reibfläche 22
- 25: Nut
- 26: Nut

- 27: Lamelle
- 28: Außenumfang der Lamelle 27
- 29: Innenumfang der Lamelle 27
- 30: Reibfläche der Lamelle 27
- 31: Außenumfang der Reibfläche 30
- 32: Innenumfang der Reibfläche 30
- 33: Nut

- 34: Lamelle
- 35: Außenumfang der Lamelle 34
- 36: Innenumfang der Lamelle 34
- 37: Reibfläche der Lamelle 34
- 38: Außenumfang der Reibfläche 37
- 39: Innenumfang der Reibfläche 37
- 40: Nut

- 41: Lamelle
- 42: Außenumfang der Lamelle 41
- 43: Innenumfang der Lamelle 41
- 44: Reibfläche der Lamelle 41
- 45: Außenumfang der Reibfläche 44
- 46: Innenumfang der Reibfläche 44
- 47: Nut

- 48: Lamelle
- 49: Außenumfang der Lamelle 48

- 50: Innenumfang der Lamelle 48
- 51: Reibfläche der Lamelle 48
- 52: Außenumfang der Reibfläche 51
- 53: Innenumfang der Reibfläche 51
- 54: Nut

- 55: Lamelle
- 56: Außenumfang der Lamelle 55
- 57: Innenumfang der Lamelle 55
- 58: Reibfläche der Lamelle 55
- 59: Außenumfang der Reibfläche 58
- 60: Innenumfang der Reibfläche 58
- 61: Nut

- 62: Lamelle
- 63: Außenumfang der Lamelle 62
- 64: Innenumfang der Lamelle 62
- 65: Reibfläche der Lamelle 62
- 66: Außenumfang der Reibfläche 65
- 67: Innenumfang der Reibfläche 65
- 68: Nut
- 68.1: Ausströmseite der Nut 68
- 68.2: Einströmseite der Nut 68

- d₁: Abstand
- d₂: Abstand
- d₃: Abstand

- α₁: Winkel
- α₂: Winkel
- α₃: Winkel
- α₄: Winkel
- α₅: Winkel

## Patentansprüche

1. Lamelle (1, 19, 27, 34, 41, 48, 55, 62) für eine Mehrscheibenlamellenkupplung, welche wenigstens eine Nuten (7.1, 7.2, 10.1, 10.2, 13.1, 13.2, 25, 26, 33, 40, 47, 54, 61; 68, 68.1, 68.2) aufweisende Reibfläche (4, 22, 30, 37, 44, 51, 58, 65) mit einer inneren Begrenzungskante (6, 24, 32, 39, 46, 53, 60, 67) und mit einer äußeren Begrenzungskante (5, 23, 31, 38, 45, 52, 59, 66) trägt, wobei wenigstens eine Nut (7.1; 7.2, 10.1, 10.2, 13.1, 13.2, 25, 26, 33, 40, 47, 54, 61; 68, 68.1, 68.2) von der inneren Begrenzungskante (6, 24, 32, 39, 46, 53, 60, 67) zu der äußeren Begrenzungskante (5, 23, 31, 38, 45, 52, 59, 66) verläuft und die wenigstens eine Nut (7.1, 7.2, 10.1, 10.2, 13.1, 13.2, 25, 26, 33, 40, 47, 54, 61; 68, 68.1, 68.2) wenigstens einen Umlenkpunkt (8.1, 8.2, 9.1, 9.2, 11.1, 11.2, 12.1, 12.2, 14.1, 15.1) aufweist, an dem die wenigstens eine Nut (7.1, 7.2, 10.1, 10.2, 13.1, 13.2, 25, 26, 33, 40, 47, 54, 61; 68, 68.1, 68.2) um einem Winkel (α₁, α₂, α₃, α₄, α₅) abgeknickt ist, **dadurch gekennzeichnet, dass**wenigstens zwei Nuten (7.1, 7.2, 10.1, 10.2, 13.1, 13.2, 25, 26, 33, 40, 47, 54, 61; 68, 68.1, 68.2) voneinander beabstandet gleichsinnig oder gegensinnig S- oder Z- förmig verlaufen und der Winkel (α₁, α₂, α₃, α₄, α₅) zwischen 75° und 115° beträgt.

2. Lamelle (1, 19, 27, 34, 41, 48, 55, 62) nach Anspruch 1, **dadurch gekennzeichnet, dass** die wenigstens eine Nut (7.1, 7.2, 10.1, 10.2, 25, 26, 33, 40, 47, 54, 61; 68, 68.1, 68.2) wenigstens zwei aufeinanderfolgende Umlenkpunkte (8.1, 8.2; 9.1, 9.2; 11.1, 11.2; 12.1, 12.2) aufweist, an welchen die wenigstens eine Nut (7.1, 7.2, 10.1, 10.2, 25, 26, 33, 40, 47, 54, 61; 68, 68.1, 68.2) in gegensinnigen Winkeln (α₁, α₂; α₃, α₄) geknickt ist.

3. Lamelle (1, 19) nach einem der vorangegangenen Ansprüche, **dadurch gekennzeichnet, dass** zwei benachbarte Nuten (10.1, 10.2; 25, 26) einen zueinander gegensinnigen Verlauf aufweisen.

4. Lamelle (1, 27, 34, 41, 48, 55, 62) nach einem der vorangegangenen Ansprüche, **dadurch gekennzeichnet, dass** wenigstens zwei benachbarte Nuten (7.1, 7.2; 13.1, 13.2; 33; 40; 47; 54; 61; 68, 68.1, 68.2) einen gleichsinnigen Verlauf aufweisen.

5. Lamelle (19, 27, 34, 41, 48, 55, 62) nach einem der vorangegangenen Ansprüche bei der die Reibfläche ein Reibbelag (22, 30, 37, 44, 51, 58, 65) ist, **dadurch gekennzeichnet, dass** die wenigstens eine Nut (25, 26, 33, 40, 47, 54, 61; 68, 68.1, 68.2) in den Reibbelag (22, 30, 37, 44, 51, 58, 65) eingearbeitet ist.

6. Lamelle (1, 19, 27, 34, 41, 48, 55, 62) nach einem der vorangegangenen Ansprüche, welche in der Art einer Scheibe (1, 19, 27, 34, 41, 48, 55, 62) ausgebildet ist und welche auf deren beiden Stirnseiten Reibflächen (4, 22, 30, 37, 44, 51, 58, 65) aufweist, **dadurch gekennzeichnet, dass** die an den Stirnseiten angeordneten Reibflächen (4, 22, 30, 37, 44, 51, 58, 65) identisch verlaufende Nuten (7.1, 7.2, 10.1, 10.2, 13.1, 13.2, 25, 26, 33, 40, 47, 54, 61; 68, 68.1, 68.2) aufweisen.

7. Lamelle nach einem der vorangegangenen Ansprüche, **dadurch gekennzeichnet, dass** wenigstens eine weitere Nut vorgesehen ist, welche als von der inneren Begrenzungskante oder von der äußeren Begrenzungskante ausgehende Sacknut ausgebildet ist und welche wenigstens einen Umlenkpunkt aufweist, an dem die wenigstens eine weitere Nut in einem Winkel abgeknickt ist.

8. Lamelle (62) nach einem der vorangegangenen Ansprüche, **dadurch gekennzeichnet, dass** die wenigstens eine Nut (68, 68.1, 68.2) über ihrer Längserstreckung in ihrer Breite variierend ausgeführt ist.

## Claims

1. Plate (1, 19, 27, 34, 41, 48, 55, 62) for a multiple-plate clutch, which comprises at least one friction surface (4, 22, 30, 37, 44, 51, 58, 65), which has grooves (7.1, 7.2, 10.1, 10.2, 13.1, 13.2, 25, 26, 33, 40, 47, 54, 61; 68, 68.1, 68.2) and has an inner bordering edge (6, 24, 32, 39, 46, 53, 60, 67) and an outer bordering edge (5, 23, 31, 38, 45, 52, 59, 66), at least one groove (7.1, 7.2, 10.1, 10.2, 13.1, 13.2, 25, 26, 33, 40, 47, 54, 61; 68, 68.1, 68.2) running from the inner bordering edge (6, 24, 32, 39, 46, 53, 60, 67) to the outer bordering edge (5, 23, 31, 38, 45, 52, 59, 66) and the at least one groove (7.1, 7.2, 10.1, 10.2, 13.1, 13.2, 25, 26, 33, 40, 47, 54, 61; 68, 68.1, 68.2) having at least one bending point (8.1, 8.2, 9.1, 9.2, 11.1, 11.2, 12.1, 12.2, 14.1, 15.1), at which the at least one groove (7.1, 7.2, 10.1, 10.2, 13.1, 13.2, 25, 26, 33, 40, 47, 54, 61; 68, 68.1, 68.2) is bent at an angle (α₁, α₂, α₃, α₄, α₅) , **characterized in that** at least two grooves (7.1, 7.2; 10.1, 10.2; 13.1, 13.2; 25, 26, 33, 40, 47, 54, 61; 68, 68.1, 68.2) run in the same or in opposite directions in an S or Z shape with a spacing between them, and the angle (α₁, α₂, α₃, α₄, α₅) is between 75° and 115°.

2. Plate (1, 19, 27, 34, 41, 48, 55, 62) according to Claim 1, **characterized in that** the at least one groove (7.1, 7.2, 10.1, 10.2, 25, 26, 33, 40, 47, 54, 61; 68, 68.1, 68.2) has at least two successive bending points (8.1, 8.2; 9.1, 9.2; 11.1, 11.2; 12.1, 12.2), at which the at least one groove (7.1, 7.2, 10.1, 10.2, 25, 26, 33, 40, 47, 54, 61; 68, 68.1, 68.2) is bent at contrary angles (α₁, α₂; α₃, α₄).

3. Plate (1, 19) according to one of the preceding claims, **characterized in that** two adjacent grooves (10.1, 10.2; 25, 26) run in opposite directions.

4. Plate (1, 27, 34, 41, 48, 55, 62) according to one of the preceding claims, **characterized in that** at least two adjacent grooves (7.1, 7.2; 13.1, 13.2; 33; 40; 47; 54; 61; 68, 68.1, 68.2) run in the same direction.

5. Plate (19, 27, 34, 41, 48, 55, 62) according to one of the preceding claims, in which the friction surface is a friction lining (22, 30, 37, 44, 51, 58, 65), **characterized in that** the at least one groove (25, 26, 33, 40, 47, 54, 61; 68, 68.1, 68.2) is incorporated into the friction lining (22, 30, 37, 44, 51, 58, 65).

6. Plate (1, 19, 27, 34, 41, 48, 55, 62) according to one of the preceding claims, which is constructed in the manner of a disc (1, 19, 27, 34, 41, 48, 55, 62) and has friction surfaces (4, 22, 30, 37, 44, 51, 58, 65) on both end faces, **characterized in that** the friction surfaces (4, 22, 30, 37, 44, 51, 58, 65) arranged on the end faces have identically patterned grooves (7.1, 7.2, 10.1, 10.2, 13.1, 13.2, 25, 26, 33, 40, 47, 54, 61; 68, 68.1, 68.2).

7. Plate according to one of the preceding claims, **characterized in that** at least one further groove is provided, the at least one further groove being designed as a blind groove which starts from the inner bordering edge or the outer bordering edge and having at least one bending point, at which the at least one further groove is bent at an angle.

8. Plate (62) according to one of the preceding claims, **characterized in that** the at least one groove (68, 68.1, 68.2) is embodied with a width that varies over its longitudinal extent.

## Revendications

1. Disque (1, 19, 27, 34, 41, 48, 55, 62) pour un embrayage multidisques, qui porte au moins une surface de friction (4, 22, 30, 37, 44, 51, 58, 65) présentant des rainures (7.1, 7.2, 10.1, 10.2, 13.1, 13.2, 25, 26, 33, 40, 47, 54, 61 ; 68, 68.1, 68.2) avec une arête de limitation interne (6, 24, 32, 39, 46, 53, 60, 67) et avec une arête de limitation externe (5, 23, 31, 38, 45, 52, 59, 66), au moins une rainure (7.1, 7.2, 10.1, 10.2, 13.1, 13.2, 25, 26, 33, 40, 47, 54, 61 ; 68, 68.1, 68.2) s'étendant de l'arête de limitation interne (6, 24, 32, 39, 46, 53, 60, 67) jusqu'à l'arête de limitation externe (5, 23, 31, 38, 45, 52, 59, 66) et l'au moins une rainure (7.1, 7.2, 10.1, 10.2, 13.1, 13.2, 25, 26, 33, 40, 47, 54, 61 ; 68, 68.1, 68.2) présentant au moins un point d'inflexion (8.1, 8.2, 9.1, 9.2, 11.1, 11.2, 12.1, 12.2, 14.1, 15.1) au niveau duquel l'au moins une rainure (7.1, 7.2, 10.1, 10.2, 13.1, 13.2, 25, 26, 33, 40, 47, 54, 61 ; 68, 68.1, 68.2) est courbée suivant un angle (α₁, α₂, α₃, α₄, α₅) ,
**caractérisé en ce qu'**au moins deux rainures (7.1, 7.2 ; 10.1, 10.2 ; 13.1, 13.2 ; 25, 26, 33, 40, 47, 54, 61 ; 68, 68.1, 68.2) s'étendent en forme de S ou de Z à distance l'une de l'autre dans le même sens ou en sens inverse et l'angle (α₁, α₂, α₃, α₄, α₅) est compris entre 75° et 115°.

2. Disque (1, 19, 27, 34, 41, 48, 55, 62) selon la revendication 1, **caractérisé en ce que** l'au moins une rainure (7.1, 7.2, 10.1, 10.2, 25, 26, 33, 40, 47, 54, 61 ; 68, 68.1, 68.2) présente au moins deux points d'inflexion successifs (8.1, 8.2 ; 9.1, 9.2 ; 11.1, 11.2 ; 12.1, 12.2) au niveau desquels l'au moins une rainure (7.1, 7.2, 10.1, 10.2, 25, 26, 33, 40, 47, 54, 61 ; 68, 68.1, 68.2) est courbée suivant des angles de sens contraire (α₁, α₂ ; α₃, α₄) .

3. Disque (1, 19) selon l'une quelconque des revendications précédentes, **caractérisé en ce que** deux rainures adjacentes (10.1, 10.2 ; 25, 26) présentent une orientation mutuelle en sens inverse.

4. Disque (1, 27, 34, 41, 48, 55, 62) selon l'une quelconque des revendications précédentes, **caractérisé en ce qu'**au moins deux rainures adjacentes (7.1, 7.2 ; 13.1, 13.2 ; 33 ; 40 ; 47 ; 54 ; 61 ; 68, 68.1, 68.2) présentent une orientation en sens inverse.

5. Disque (19, 27, 34, 41, 48, 55, 62) selon l'une quelconque des revendications précédentes, dans lequel la surface de friction est un revêtement de friction (22, 30, 37, 44, 51, 58, 65), **caractérisé en ce que** l'au moins une rainure (25, 26, 33, 40, 47, 54, 61 ; 68, 68.1, 68.2) est pratiquée dans le revêtement de friction (22, 30, 37, 44, 51, 58, 65).

6. Disque (1, 19, 27, 34, 41, 48, 55, 62) selon l'une quelconque des revendications précédentes, lequel est réalisé sous forme de rondelle (1, 19, 27, 34, 41, 48, 55, 62) et qui présente sur ses deux côtés frontaux des surfaces de friction (4, 22, 30, 37, 44, 51, 58, 65), **caractérisé en ce que** les surfaces de friction (4, 22, 30, 37, 44, 51, 58, 65) disposées au niveau des côtés frontaux présentent des rainures (7.1, 7.2, 10.1, 10.2, 13.1, 13.2, 25, 26, 33, 40, 47, 54, 61 ; 68, 68.1, 68.2) s'étendant de manière identique.

7. Disque selon l'une quelconque des revendications précédentes, **caractérisé en ce qu'**au moins une rainure supplémentaire est prévue, laquelle est réalisée sous forme de rainure borgne partant de l'arête de limitation interne ou de l'arête de limitation externe, et qui présente au moins un point d'inflexion au niveau duquel l'au moins une rainure supplémentaire est courbée suivant un certain angle.

8. Disque (62) selon l'une quelconque des revendications précédentes, **caractérisé en ce que** l'au moins une rainure (68, 68.1, 68.2) est réalisée avec une largeur variable sur son étendue longitudinale.
